# FASCICULE DE BREVET EUROPEEN

(11) **EP 3 721 267 B1**
(45) Date de publication et mention de la délivrance du brevet: **16.11.2022**
(21) Numéro de dépôt: 20701494.5
(22) Date de dépôt: 29.01.2020
(51) Int. Cl.: G01V 3/10, G01V 11/00, G01V 8/00, G01S 13/88, G01S 13/86, G01S 13/89

(54) **SYSTÈME DE DÉTECTION À DOUBLE CHAMP ET PROCÉDÉ DE DÉTECTION**
DOPPELFELD-DETEKTIONSSYSTEM UND DETEKTIONSVERFAHREN
DOUBLE-FIELD DETECTION SYSTEM AND DETECTION PROCESS

(30) Priorité: 29.01.2019 FR 1900765
(43) Date de publication de la demande: 14.10.2020
(73) Titulaire: Manneschi, Alessandro, 52100 Arezzo (IT)
(72) Inventeur: Manneschi, Alessandro, 52100 Arezzo (IT)
(74) Mandataire: Regimbeau
(86) Numéro de dépôt international: PCT/EP2020/052177
(87) Numéro de publication internationale: WO 2020/157139

(56) Documents cités:
- EP-A1- 1 750 147
- EP-A1- 2 854 217
- EP-B1- 1 750 147
- WO-A2-2018/225028
- US-A1- 2009 322 873

## Description

### DOMAINE DE L'INVENTION

La présente invention concerne le domaine des détecteurs conçus pour la détection d'objets ou matières non autorisés dans une zone à accès protégé.

La présente invention concerne tout particulièrement le domaine des scanners corporels conçus pour inspecter des individus, par exemple les passagers avant l'embarquement, dans des aéroports, ou encore des individus accédant à un site public, par exemple une enceinte de sport tel qu'un stade ou une salle de spectacle, afin de détecter les objets interdits dissimulés sous les vêtements. De tels appareils permettent notamment d'éviter la palpation systématique.

### ARRIERE PLAN TECHNOLOGIQUE

L'examen d'individus, notamment de passagers dans les aéroports, est opéré traditionnellement à l'aide d'un portique détecteur de métaux basé sur une détection à base d'un champ de type inductif généré par des bobinages. De tels portiques détecteurs de métaux sont adaptés pour la détection d'objets métalliques présentant une menace, tels que des armes à feu, des grenades, couteaux ou tout autre objet métallique potentiellement dangereux.

La généralisation de l'utilisation de portiques détecteurs de métaux remonte aux années 1970.

Si par le passé, les cibles étaient formées essentiellement d'armes à feu conventionnelles de taille moyenne réalisées principalement en métaux magnétiques, de nouveaux types d'attaque et la sophistication progressive des armes conduisent aujourd'hui à des exigences supérieures de détection englobant des couteaux et armes en alliage léger ou autres objets de petite taille similaires.

Malgré la réduction de taille des cibles, les détecteurs de métaux les plus récents et les plus perfectionnés, mettant toujours en œuvre une détection à base d'un champ de type inductif, permettent une inspection rapide et efficace des passagers avec une détection complètement automatique, une couverture complète de la totalité des individus et un faible taux d'alarmes intempestives, typiquement inférieur à 10% en l'état des procédures de contrôle actuellement en place.

Les alarmes sont traitées par une palpation ou par recherche secondaire avec détecteur de métaux portatif par des agents habilités.

En outre, l'utilisation de faibles champs inductifs basse fréquence non ionisant répond aux exigences les plus rigoureuses en matière d'exposition d'individus humains aux champs électromagnétiques, notamment prenant en compte les contraintes spécifiques pour les enfants et les femmes enceintes.

On sait cependant que des tentatives d'utilisation d'autres types de menaces, tels que par exemple des explosifs, ont rendu nécessaire de disposer de moyens de détection spécifiques additionnels dédiés à des matériaux non métalliques.

Les détecteurs de métaux ne sont pas adaptés pour détecter des objets non métalliques du fait que le champ inductif basse fréquence ne peut interagir efficacement avec les objets non électriquement conducteurs et non magnétiques.

Pour cette raison, un nouveau type d'équipement a été développé, dénommé généralement « scanner corporel » (ou en terminologie anglo-saxonne « full-body scanner» ou « security scanner» ou encore « AIT devices » pour « Advanced Imaging Technology devices ».

Ces scanners corporels utilisent une détection par imagerie à base d'un champ micro-ondes.

Les scanners corporels sont adaptés pour générer une reconstruction holographique de l'image micro-ondes de la surface du corps d'un individu examiné afin de localiser des objets métalliques ou non métalliques constituant un corps étranger.

Bien que les scanners corporels permettent d'améliorer la sécurité en fournissant une imagerie des objets non-métalliques, il est bien connu que les systèmes d'inspection micro-ondes utilisés dans les scanners corporels présentent des limitations inhérentes à la physique employée, notamment l'impossibilité de pénétrer la peau et par conséquent d'examiner les cavités du corps et l'intérieur des chaussures, ainsi que la difficulté à obtenir des images satisfaisantes des surfaces périphériques du corps qui sont mal illuminées par les émetteurs micro-ondes ou qui fournissent des signaux réfléchis limités aux antennes réceptrices.

En outre, si l'on veut appliquer les mêmes critères de détection pour des pièces métalliques de petite dimension détectées correctement par les portiques détecteurs de métaux haute performance avec un faible taux d'alarme, il est nécessaire de disposer de scanners corporels hautement sensibles ce qui correspond à un taux d'alarme extrêmement élevé pour lesdits scanners corporels.

Les statistiques chiffrent le taux de fausses alarmes pour des scanners corporels dans une fourchette comprise entre 65% et 85% et ce y compris avec les algorithmes les plus récents et les plus performants.

On observe donc qu'en l'état de l'état de la technique, les taux de fausses alarmes issues de scanners corporels sont très nettement plus élevés que les taux des alarmes intempestives résultant des portiques détecteurs de métaux.

Il résulte de ce qui précède que l'on voit ainsi fréquemment la majorité des passagers transitant par le scanner corporel contraints de se plier aux procédures de palpations manuelles, ce qui induit de longues files d'attente, conduit évidemment à des désagréments et à une baisse de sécurité tant pour le public ainsi examiné que pour le personnel d'intervention.

Le document EP 1 750 147 au nom du Demandeur décrit un système de détection comprenant des moyens de détection de type champ inductif associés à des moyens de détection additionnels. Dans ce document, il est en particulier proposé d'utiliser, simultanément et au sein de ce même système, les moyens de détection de type champ inductif et avec un détecteur de rayons gamma/X afin d'améliorer la détection. Il est également envisagé de modifier la sensibilité du détecteur de rayons gamma/X en fonction de la détection effectuée par les moyens de détection de type champ inductif associé, cette modification étant réalisée en temps réel, lors du passage d'une personne inspectée à travers le système.

Le document EP 2 854 217 décrit un système de détection comprenant des moyens de détection par imagerie microonde. Dans ce système, l'antenne émettrice est placée dans un panneau tandis que l'antenne réceptrice est placée dans le panneau opposé.

Le document US 2009/322872 décrit un système microondes réalisant une image millimétrique d'une personne inspectée.

Le document WO 2018/225028 décrit un système d'inspection comprenant d'une part un scanner corporel et d'autre part un dispositif de détection pour des chaussures.

### RESUME DE L'INVENTION

Dans ce contexte, un objectif de l'invention est de proposer de nouveaux moyens permettant d'améliorer les performances de fonctionnement des scanners corporels.

Un premier objectif de l'invention est en particulier de proposer un nouveau scanner corporel qui permet une inspection de personnes en optimisant les performances de discrimination, c'est-à-dire les capacités de flux de personnes concernées.

Un deuxième objectif de l'invention est en particulier de proposer un nouveau scanner corporel qui permet une inspection de personnes en optimisant les performances de sécurité et discrimination, c'est-à-dire les capacités de détection et de flux de personnes concernées.

Les objectifs précités sont atteints selon la présente invention grâce à un système de détection conforme à la revendication 1 et un procédé de détection conforme à la revendication 11. Les revendications dépendantes définissent des modes de réalisation.

En particulier, le système de détection comprend des moyens de détection de type champ inductif et des moyens de détection de type imagerie par champ à microondes, des moyens d'analyse adaptés pour analyser les signaux issus des moyens de détection inductifs et en déduire la présence potentielle de cibles métalliques et des moyens adaptés pour modifier en conséquence, au moins sur une zone d'intérêt, la sensibilité des moyens de détection par imagerie micro-ondes.

On notera que la modification de la sensibilité des moyens de détection par imagerie micro-ondes peut notamment être réalisée en modifiant des paramètres de traitement de l'image par les moyens d'analyse, par exemple à l'aide de classifications suivant une logique neuronale. A titre d'exemple non limitatif, la sensibilité de l'imagerie micro-ondes 10 peut être modifiée en modifiant un seuil (pluridimensionnel, plusieurs paramètres de traitement de l'image étant modifiés simultanément) à partir duquel des instructions de génération d'une alarme (sonore et/ou optique) sont envoyées par les moyens d'analyse à un dispositif d'alerte adapté, en fonction des signaux générés par les moyens de détection de type champ inductif.

Le procédé de détection d'objets non autorisés à l'aide d'un scanner corporel comprend les étapes consistant à procéder à un examen d'un individu à l'aide d'une double technique comprenant une analyse de type champ inductif et une analyse par imagerie à base de champ micro-ondes, à analyser le signal issu des moyens de détection de type inductif et à modifier la sensibilité des moyens de détection par imagerie à base de micro-ondes lorsque les moyens de type inductif décèlent la présence d'une cible métallique potentielle.

Plus précisément dans le cadre de l'invention, la sensibilité des moyens d'analyse par imagerie à base de micro-ondes est placée à un niveau élevé lorsque les moyens de détection de type inductif décèlent la présence possible d'une cible métallique et au contraire est placée à un niveau plus faible lorsque les moyens de détection de type inductif ne décèlent pas la présence possible d'une cible métallique.

Ainsi dans le cadre de l'invention, si les moyens d'analyse de type inductif ne décèlent pas la présence potentielle d'objets métalliques, la sensibilité des moyens d'analyse par imagerie à base de micro-ondes peut rester relativement faible, à un niveau adéquat pour la détection d'objets non métalliques. On notera en particulier que la modification de la sensibilité des moyens d'analyse par imagerie est modifiée non pas lors de l'acquisition des signaux microondes, mais lors de leur traitement par les moyens d'analyse.

Le taux élevé habituel de fausses alarmes résultant de l'utilisation des moyens d'analyse à base d'imagerie à micro-ondes (comme indiqué précédemment de l'ordre de 65% à 85%) étant limité selon l'invention aux seuls cas de détection d'un objet métallique préalable par le détecteur de métal associé de type inductif (euxmêmes de l'ordre de 10%), le taux global de fausses alarmes résultant d'un scanner corporel conforme à la présente invention, est relativement faible. Pour les 90% d'individus restant sur lesquels les moyens détecteurs de métal ne détectent pas d'objet métallique, le traitement des signaux microondes par les moyens d'analyse du scanner corporel est en effet réalisé en plaçant la sensibilité sur un niveau de sensibilité faible. Le taux global de fausses alarmes résultant d'un scanner corporel conforme à la présente invention chute ainsi typiquement dans une plage comprise entre 10 et 20%.

L'homme de l'art comprendra que le pilotage de la sensibilité des moyens d'analyse par imagerie à base de micro-ondes, en augmentant la sensibilité de ces moyens d'analyse par imagerie à base de micro-ondes formant scanner corporel, dans les seuls cas où un objet métallique a été préalablement détecté par les moyens détecteurs de métaux, permet de réduire considérablement le taux global de fausses alarmes du système conforme à la présente invention.

Statistiquement, on peut considérer que les critères de détection d'une alarme de type métallique par induction se révélant dans moins de 10% d'une population examinée, au moins 90% des personnes inspectées ne seront inspectées que pour des cibles de type diélectrique (non métalliques) par le scanner corporel à base de micro-ondes, avec un champ micro-ondes à sensibilité réduite, conduisant à un taux global de fausses alarmes très sensiblement réduit.

Il en découle que, contrairement à ce qui a été décrit dans le document EP 1 750 147, la modification de la sensibilité des moyens de détection additionnels (par imagerie microondes) n'est pas réalisée en modifiant un niveau d'alarme mais en adaptant le traitement des signaux issus des moyens de détection par imagerie de sorte à modifier en sortie l'image microonde.

En pratique l'opérateur peut disposer sur un écran unique de la visualisation du résultat de l'analyse de type inductif visant la recherche d'un objet métallique et de l'imagerie résultant de l'analyse à base de micro-ondes.

### DESCRIPTION DES FIGURES

D'autres caractéristiques, buts et avantages de la présente invention apparaîtront à la lecture de la description détaillée qui va suivre, et au regard des dessins annexés donnés à titre d'exemples non limitatifs et sur lesquels :

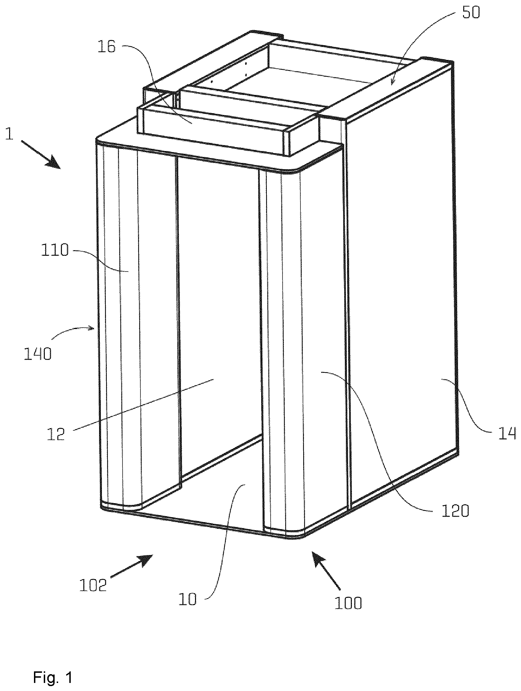

La figure 1 représente une vue schématique en perspective d'un système d'analyse conforme à la présente invention,

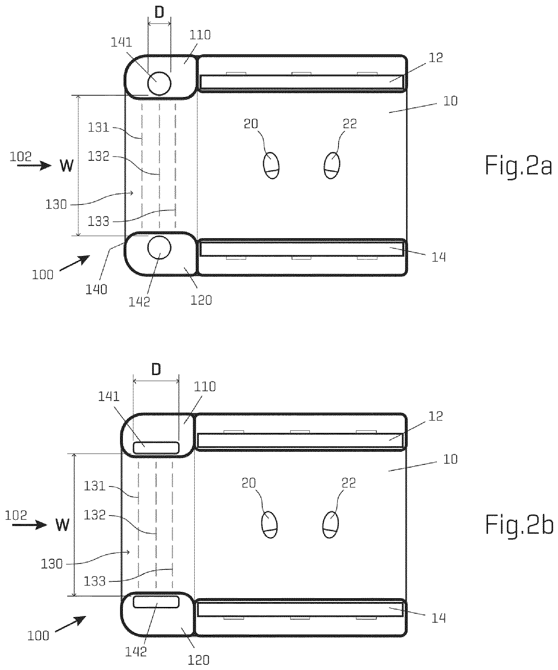

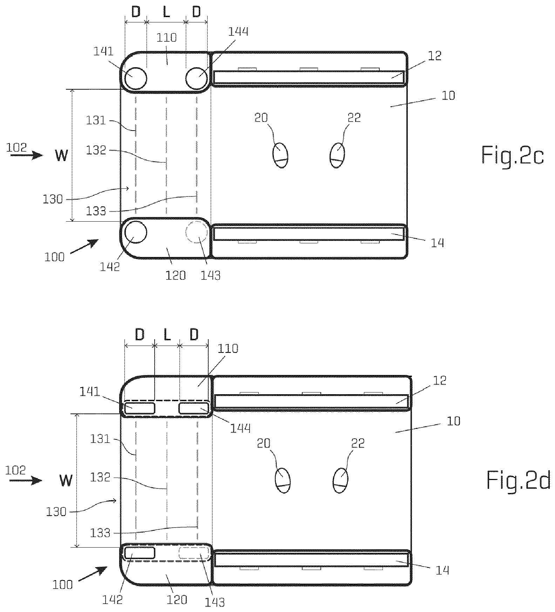

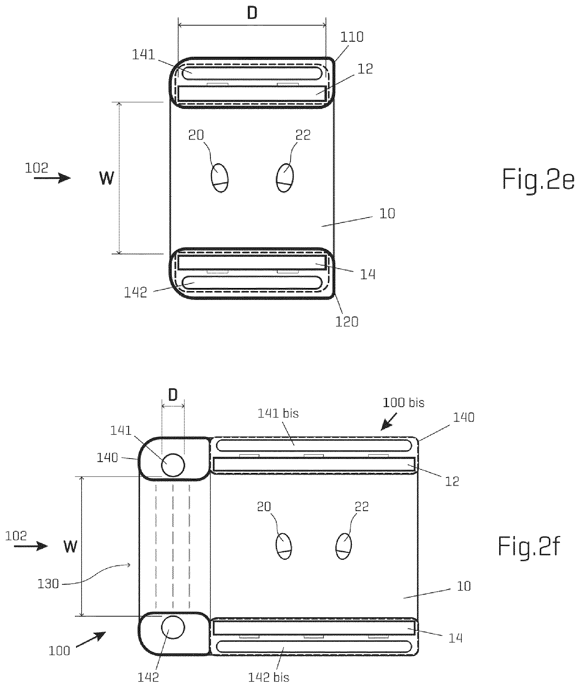

Les figures 2a, 2b, 2c, 2d, 2e et 2f représentent des vues schématiques en coupe horizontale du même système de détection conforme à la présente invention, conformes respectivement à six exemples de réalisation de la présente invention,

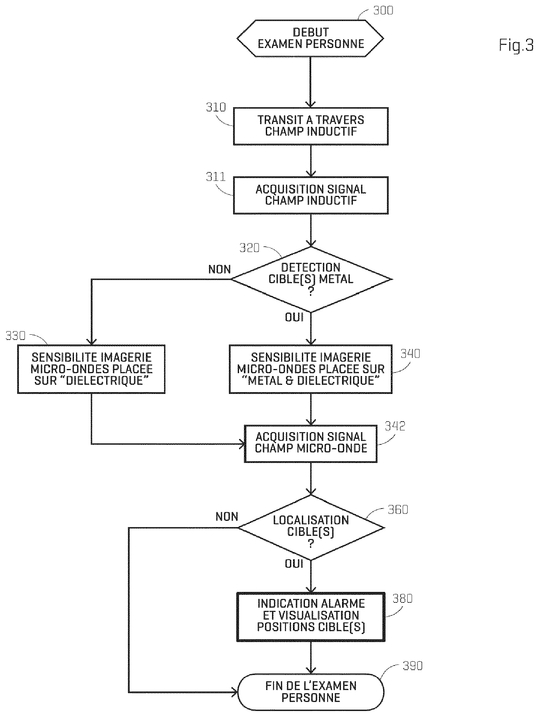

La figure 3 représente schématiquement un organigramme général de fonctionnement d'un système d'analyse conforme à la présente invention opérant une détection d'objets métalliques avec un champ inductif, permettant une détection de présence d'un objet métallique et une influence de la sensibilité des moyens de détection par imagerie à base de micro-ondes,

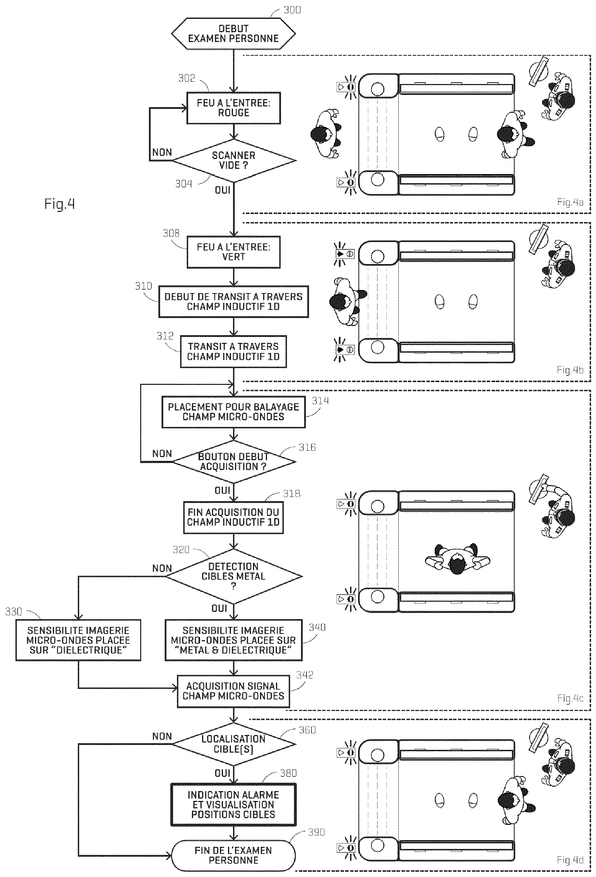

La figure 4 représente un organigramme similaire à la figure 3, plus en détail, avec illustration corrélative du positionnement successif d'un individu dans les différents éléments du système d'analyse, à quatre étapes successives illustrées sur les figures 4a, 4b, 4c et 4d, dans le cas d'une détection d'objets métalliques avec un champ inductif monodimensionnel,

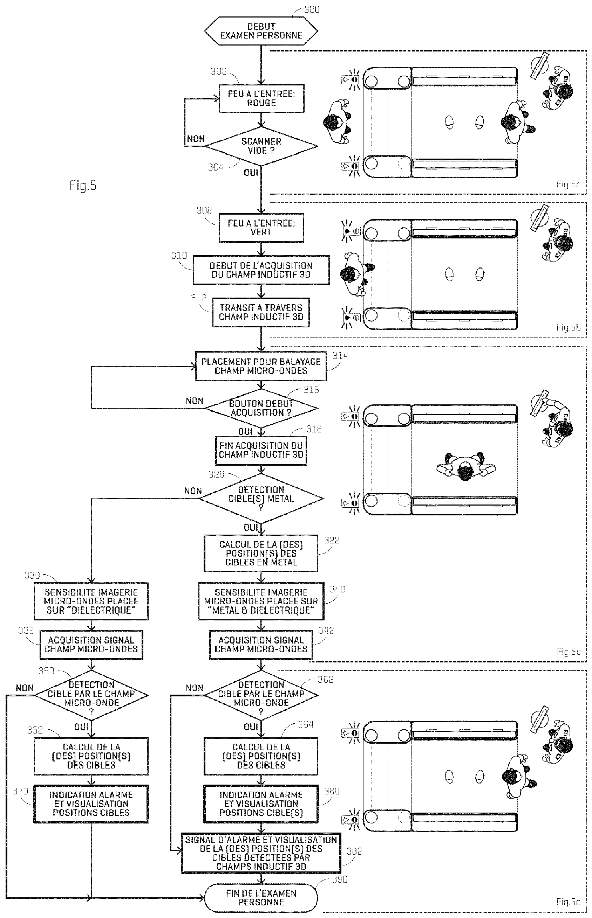

La figure 5 représente une vue similaire à la figure 4, appliquée à un organigramme exploitant un champ inductif tridimensionnel, avec illustration corrélative du positionnement successif d'un individu dans les différents éléments du système d'analyse, à quatre étapes successives illustrées sur les figures 5a, 5b, 5c et 5d,

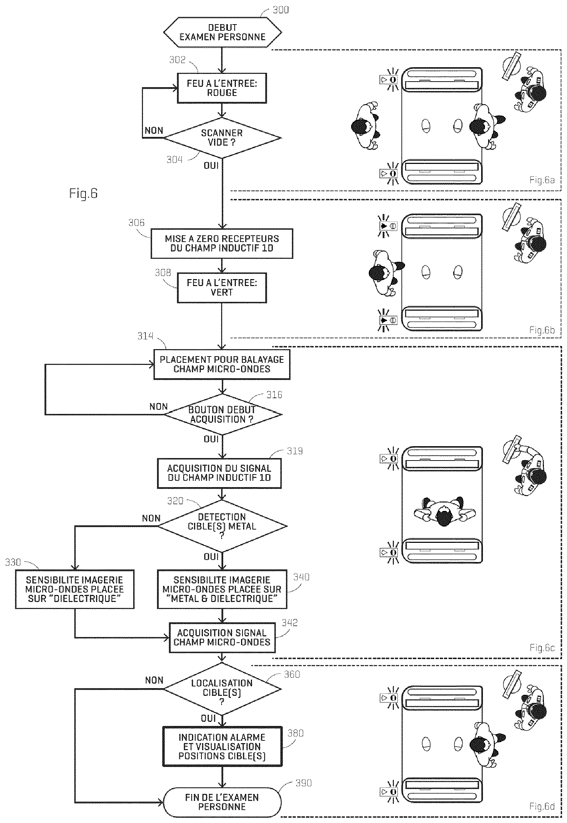

La figure 6 représente une variante de l'organigramme dans l'hypothèse d'une colocalisation de moyens d'analyse à base de micro-ondes et de moyens d'analyse de type inductif monodimensionnel, avec illustration corrélative du positionnement successif d'un individu dans les différents éléments du système d'analyse, à quatre étapes successives illustrées sur les figures 6a, 6b, 6c et 6d,

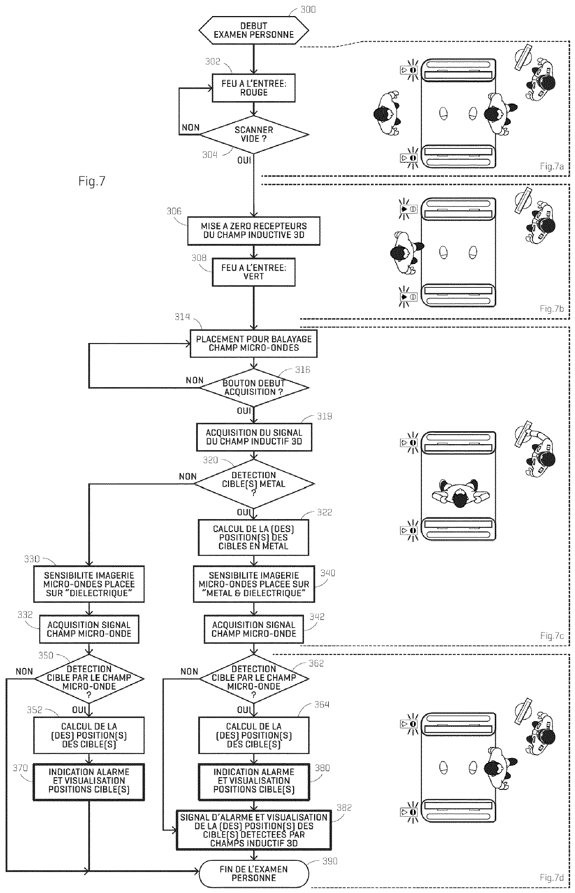

La figure 7 représente une variante de l'organigramme dans l'hypothèse d'une colocalisation de moyens d'analyse à base de micro-ondes et de moyens d'analyse de type inductif tridimensionnel, avec illustration corrélative du positionnement successif d'un individu dans les différents éléments du système d'analyse, à quatre étapes successives illustrées sur les figures 7a, 7b, 7c et 7d, et

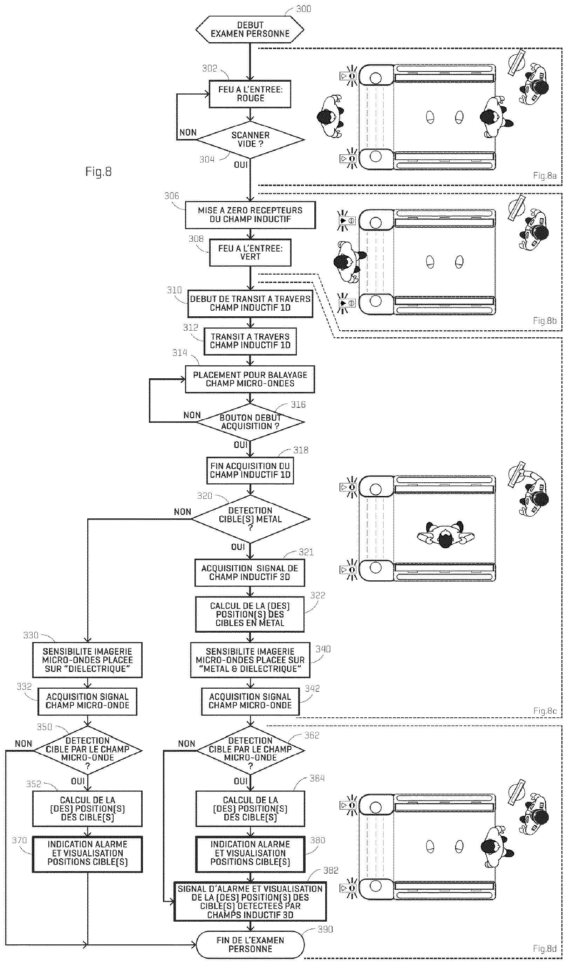

La figure 8 représente une autre variante de l'organigramme dans l'hypothèse d'une colocalisation de moyens d'analyse à base de micro-ondes et de moyens d'analyse de type inductif tridimensionnel, précédés par des moyens d'analyse de type inductif monodimensionnel, avec illustration corrélative du positionnement successif d'un individu dans les différents éléments du système d'analyse, à quatre étapes successives illustrées sur les figures 8a, 8b, 8c et 8d.

### DESCRIPTION DETAILLEE DE L'INVENTION

Comme indiqué précédemment, l'invention concerne un système 1 de détection d'objets ou matières non autorisés dans une zone à accès protégé, comprenant des moyens de détection de type champ inductif 100 et des moyens de détection de type par imagerie à champ micro-ondes 10, associés à des moyens d'analyse 50 adaptés pour analyser les signaux issus des moyens de détection inductifs 100 et en déduire la présence potentielle de cibles métalliques et adapter, pour modifier en conséquence, au moins sur une zone d'intérêt, la sensibilité des moyens de détection par imagerie micro-ondes 10.

Il peut être relevé que la combinaison de moyens de détection de type champ inductif (détecteur de métal) 100 et de type imagerie à champ micro-ondes 10 est synergique. En particulier, des moyens de détection de type imagerie à champ micro-ondes 10 ne sont pas capables de distinguer ni de déterminer si un objet cible qui a été identifié est en métal ou en matériau diélectrique. En effet, la réponse est similaire dans les deux cas. Il en découle que l'utilisation d'un système dans lequel sont utilisés à la fois des moyens de détection du type champ inductif et du type par imagerie microonde, en plus d'améliorer la sécurité et de réduire les alarmes intempestives, permet également de caractériser la composition de la cible visualisée par les moyens de détection du type par imagerie à champ micro-ondes 10.

Les moyens d'analyse 30 peuvent notamment comprendre un calculateur de type processeur, microprocesseur, microcontrôleur, etc., configuré pour exécuter des instructions.

Plus précisément, on a représenté sur la figure 1 annexée, un dispositif conforme à l'invention comprenant ainsi en combinaison un scanner corporel 10 formant les moyens de détection à imagerie à micro-ondes et un détecteur de type champ inductif 100, le détecteur de type champ inductif 100 étant un détecteur de métal.

En d'autres termes selon la présente invention le scanner corporel 10 intègre un détecteur de type champ inductif 100.

La structure générale du scanner corporel 10 et des moyens de détection de type inductif 100 peut faire l'objet de tout mode de réalisation connu. Elle ne sera donc pas décrite dans le détail par la suite.

A titre d'exemple non limitatif, le scanner corporel 10 peut être conforme aux dispositions décrites dans le document EP-2202700.

Le scanner corporel procède essentiellement par mesure de l'énergie microonde réfléchie et/ou absorbée en fonction des propriétés des matériaux examinés, notamment en fonction des propriétés diélectriques complexes.

Le détecteur de type inductif 100 est de préférence formé d'un portique ou équivalent comprenant deux montants verticaux 110, 120, surmonté d'un barreau horizontal 16.

Les moyens d'analyse 50 peuvent être logés en un lieu quelconque du boitier des détecteurs 10 et 100, par exemple au niveau du barreau 16.

Le détecteur de type champ inductif 100 est placé de préférence en entrée du scanner corporel 10 comme on le voit sur la figure 1. Il définit un canal ou couloir de passage 102 que doit emprunter tout individu pour atteindre le scanner corporel 10. Ce canal ou couloir de passage 102 est encadré par deux panneaux latéraux intégrés aux montants 110 et 120 respectivement.

Les panneaux latéraux 110, 120 logent des moyens 140 formant détecteur de type champ inductif. Ces moyens 140 sont formés de préférence de bobinages placés respectivement dans les panneaux 110, 120.

La technologie de détecteur de métaux à base de bobinage est bien connue de l'homme de l'art. Elle ne sera donc pas décrite non plus dans le détail par la suite.

L'on rappelle cependant que généralement les détecteurs de métaux de type inductif comprennent au moins un bobinage émetteur placé d'un côté du passage 102 et au moins un bobinage récepteur placé sur le côté opposé du passage 102. Le bobinage émetteur est alimenté par un courant électrique alternatif de fréquence contrôlée, de préférence une gamme de fréquences déterminées et contrôlées, pour émettre un champ magnétique, typiquement entre 100 Hz et 50 kHz. Le bobinage récepteur est conçu pour détecter les perturbations de ce champ magnétique dues à la présence d'un objet métallique dans le passage 102 et au déplacement de cet objet métallique dans le passage 102, par exemple l'atténuation de l'amplitude du champ magnétique, voire le changement de phase du signal, dus par exemple aux courants de Foucault générés sur l'objet métallique.

En pratique chacun des bobinages émetteur et récepteur est formé de préférence d'une pluralité de bobinages ou spires élémentaires, couvrant une partie respective de la hauteur du portique, pour permettre de discriminer la position des cibles en métal détectées et ainsi localiser en hauteur la position de ces cibles.

Par ailleurs de préférence chacun des bobinages est alternativement émetteur et récepteur.

De préférence, les panneaux latéraux 110, 120 logent également des moyens 130 formant des barrières de détection de passage, réparties longitudinalement sur le trajet de déplacement dans le canal 102.

Arbitrairement sur les figures 2a à 2d et 2f, on a ainsi représenté trois barrières de détection 131, 132 et 133 que tout individu pénétrant dans le système conforme à l'invention, franchit successivement.

En pratique l'invention peut utiliser tout type de technologie pour réaliser les moyens 130 formant barrières de détection.

Il peut s'agir par exemple et non limitativement de barrières optiques formées à base de paires d'émetteur/récepteur disposés respectivement dans les deux panneaux latéraux 110, 120. Un signal optique est transmis entre un émetteur situé d'un côté du passage 102, vers un récepteur situé sur le côté opposé du passage 102, tant qu'aucun individu ne vient se placer sur le trajet de ce signal optique. Par contre le signal optique est interrompu lorsqu'un individu qui transite à travers le passage 102 se trouve en regard de ce faisceau optique.

Les barrières de détection de passage 130 peuvent être formées de toute autre technologie que la technologie optique.

La détection de l'avancée d'un individu et de son positionnement dans le couloir 102 peut être opérée par exemple à l'aide d'au moins une caméra correctement placée, permettant de détecter, par exemple par analyse de pixels, le passage successif d'un individu, par une pluralité de barrières fictives correspondant à la localisation des barrières optiques 131, 132 et 133 décrites dans la description qui précède.

De même, le détecteur de type champ inductif 100 associé au scanner corporel 10 conforme à l'invention peut être équipé d'un système de type doppler ou équivalent permettant de connaître la place et le déplacement d'un individu dans le couloir 102.

Les figures 2a à 2f, qui représentent une vue schématique en coupe horizontale du système conforme à l'invention, représentent six variantes non limitatives de réalisation.

On notera tout d'abord sur les figures 2a à 2f, la présence de marquages au sol 20, 22, sensiblement au centre de l'espace formant un scanner corporel 10. Ces marquages 20, 22 correspondent de préférence au contour d'empreintes de semelles de chaussures. Ces marquages 20, 22 sont destinés à recevoir les pieds d'un individu au cours de son examen par le scanner corporel 10. Ces marquages 20, 22 permettent de garantir un positionnement précis de l'individu examiné par rapport à un moyen émetteur/récepteur micro-ondes 12 et un moyen récepteur/émetteur micro-ondes 14 placés en regard, respectivement de part et d'autre du couloir ainsi formé dans le scanner corporel 10, dans le prolongement du couloir amont 102 formé par le détecteur de type champ inductif 100.

Bien que cela ne soit pas représenté sur les figures 2a à 2f annexées, le détecteur de type champ inductif 100 peut également être pourvu au sol d'une ligne centrale ou un moyen équivalent délimitant le trajet préférentiel de l'individu lors de son déplacement dans le détecteur de type champ inductif 100 afin de garantir un positionnement précis de l'individu par rapport aux panneaux latéraux 110, 120 et par conséquent par rapport aux moyens de détection 140.

Le scanner corporel 10 peut être traversant. Dans ce cas après avoir été examiné dans le scanner corporel 10, l'individu examiné sort du scanner corporel 10 par son extrémité opposée au détecteur de type champ inductif 100.

Le scanner corporel 10 peut également être fermé sur son extrémité opposée au détecteur de type champ inductif 100. Dans ce cas après avoir été examiné dans le scanner corporel 10, l'individu examiné sort du scanner corporel 10 en repassant par le détecteur de type champ inductif 100.

Comme indiqué précédemment, les moyens détecteurs de métal de type inductif positionnés dans les panneaux latéraux 110, 120 du détecteur de type champ inductif 100 sont formés de préférence à base de bobinages.

On a ainsi représenté sur la figure 2a une première variante de réalisation selon laquelle ces moyens 140 sont formés de deux transducteurs 141, 142 configurés sous forme d'un bobinage enroulé sur des colonnes respectives.

De tels moyens 140 permettent de détecter la présence d'objets métalliques sur un individu qui traverse le détecteur de type champ inductif 100. Cependant ils ne permettent pas de localiser précisément les objets métalliques sur une section horizontale de l'individu. En d'autres termes de tels moyens ne permettent pas d'indiquer précisément si un objet métallique détecté est situé plutôt sur l'avant ou sur l'arrière d'un individu, ou encore plutôt sur la gauche ou sur la droite d'un individu.

De préférence la largeur D de chaque colonne des transducteurs 141 et 142 représentés sur la figure 2a est comprise entre 140 et 300 mm, tandis que la distance transversale W entre ces colonnes des deux transducteurs 141 et 142 est de préférence comprise entre 680 et 820 mm.

La figure 2b représente une structure proche comprenant un transducteur 141, 142 respectivement de chaque côté du détecteur de type champ inductif dans l'un des panneaux latéraux 110, 120. Cependant, selon la figure 2b, les transducteurs 141, 142 ne sont pas formés d'un bobinage enroulé sur une colonne, mais d'un bobinage enroulé sur un panneau ayant une extension longitudinale dans le sens du déplacement au sein du détecteur de type champ inductif.

De préférence la largeur D de chaque panneau des transducteurs 141 et 142 représentés sur la figure 2b est comprise entre 140 et 600 mm, tandis que la distance transversale W entre les panneaux de ces deux transducteurs 141 et 142 est de préférence comprise entre 680 et 820 mm.

On a représenté sur la figure 2c, une variante de réalisation selon laquelle les moyens 140 comprennent au moins trois transducteurs bobinage répartis entre les panneaux latéraux 110, 120 sous forme d'au moins un bobinage dans un panneau latéral et deux bobinages dans le panneau latéral opposé.

Les deux bobinages situés dans un panneau latéral commun 110 ou 120 sont par ailleurs espacés longitudinalement.

L'homme de l'art comprendra que la configuration à deux transducteurs représentés sur les figures 2a, 2b permet une détection de métal avec localisation de celui-ci en une dimension (en hauteur grâce à un découpage en hauteur du bobinage récepteur).

Les configurations illustrées sur la figure 2c permettent quant à elles une détection de métal avec localisation du métal en trois dimensions. Cette localisation en trois dimensions est rendue possible par le fait que l'individu franchit successivement plusieurs lignes privilégiées de détection qui correspondent à des lignes fictives reliant respectivement les centres des bobinages émetteurs et récepteurs. Ainsi si l'on considère arbitrairement que le bobinage 142 situé d'un côté du détecteur 100 est émetteur, tandis que les deux bobinages 141 et 144 situés sur le côté opposé du détecteur 100 sont récepteurs, un individu qui se déplace dans le détecteur 100 franchit successivement une première ligne privilégiée qui relie les transducteurs 142 et 141, puis une deuxième ligne privilégiée qui relie les transducteurs 142 et 144.

Plus précisément, la figure 2c représente en trait continu une configuration à trois transducteurs : deux transducteurs 141 et 144 dans un panneau latéral 110 et un transducteur 142 dans le panneau latéral opposé 120.

La figure 2c représente également en traits interrompus un quatrième transducteur 143 dans le panneau 120 commun au transducteur 142. Le transducteur 143 est espacé longitudinalement par rapport au transducteur 142. Avantageusement les transducteurs 142 et 143 sont placés respectivement en regard des transducteurs 141 et 144.

La figure 2c correspond ainsi à une configuration à deux transducteurs 141, 144 dans le premier panneau latéral 110 et deux transducteurs 142, 143 dans le second panneau latéral 120. L'homme de l'art comprendra que la configuration à quatre transducteurs 141, 142, 143 et 144 illustrée sur la figure 2c permet de renforcer la résolution et la fiabilité de la localisation en trois dimensions des objets métalliques détectés en ajoutant des lignes additionnelles de détection préférentielle correspondant aux lignes reliant deux transducteurs en regard (142 et 141, 142 et 144, 143 et 141, 143 et 144, avec option de faire fonctionner alternativement chaque bobinage en émetteur et en récepteur).

De préférence la largeur D de chaque colonne des transducteurs 141, 142, 143 et 144 représentés sur la figure 2c est comprise entre 140 et 300 mm, l'intervalle L entre deux colonnes adjacentes 141 et 144, ou 142 et 143, est de préférence compris entre 1,5 et 3 fois la largeur D, soit entre 210 mm et 900 mm, et donc un entraxe entre les paires de transducteurs compris entre 350 mm et 1200 mm, tandis que la distance transversale W entre les colonnes de ces deux transducteurs 141 et 142 est de préférence comprise entre 680 et 820 mm.

Ainsi l'angle formé entre les lignes de détection reliant les transducteurs 141 et 142 d'une part et 144 et 142 d'autre part est compris entre 15° et 60°, soit typiquement de l'ordre de 30° à 45°. De même l'angle formé entre les lignes de détection reliant les transducteurs 141 et 143 d'une part et 144 et 143 d'autre part, ou les transducteurs 142 et 141 d'une part et 143 et 141 d'autre part, ou encore les transducteurs 142 et 144 d'une part et 143 et 144 d'autre part est compris entre 15° et 60°, soit typiquement de l'ordre de 30° à 45°.

Cet angle est important pour permettre notamment de localiser les cibles en métal sur la largeur de l'individu, c'est-à-dire déterminer si les cibles en métal sont situées plutôt sur la gauche ou sur la droite de l'individu. En définissant en effet des lignes de détection oblique par rapport à la direction de déplacement de l'individu, cet angle impose des lignes de détection (142/144, 143/141, 144/142, 141/143) qui sont coupées en premier ou dernier lieu par un côté de l'individu.

La localisation entre l'avant et l'arrière sur l'individu des cibles en métal, est quant à elle opérée notamment lorsque l'avant ou l'arrière de l'individu traverse les lignes de détection transversales (141/142, 143/144, 142/141, 144/143).

Bien entendu les moyens d'analyse 50 exploitent l'ensemble des données détectées par l'ensemble des transducteurs récepteurs 141, 142, 143 et 144 pour préciser la localisation des cibles en métal, gauche/droit, avant/arrière. En effet les objets en métal détectés, qu'ils soient situés sur la gauche ou sur la droite de l'individu, sur l'avant ou l'arrière de l'individu, ont une influence lorsqu'ils coupent une ligne de détection que celle-ci soit transversale ou oblique.

La figure 2d représente une variante de réalisation proche de la figure 2c selon laquelle les transducteurs à colonne 141, 144 et 142, 143 de la figure 2c sont remplacés sur la figure 2d par des transducteurs de type panneau.

Les valeurs de largeur D de transducteurs 141, 142, 143 et 144, écart L entre les transducteurs, entraxe entre les transducteurs, distance transversale W entre les transducteurs et angle entre les lignes transversales et obliques de détection ainsi formées, indiquées pour la figure 2c restent applicables à la figure 2d.

La figure 2e représente une autre variante de réalisation selon laquelle les moyens détecteurs de métaux de type inductif 140 sont colocalisés avec les moyens 12, 14 de détection micro-ondes.

Autrement dit, selon le mode de réalisation de la figure 2e, les moyens de détection de type inductif 140 et les moyens de détection à micro-ondes 12, 14 sont colocalisés dans des panneaux latéraux communs encadrant le scanner corporel 10.

Plus précisément, dans un panneau latéral 110 on aperçoit sur la figure 2c un transducteur en panneau 141 de type inductif et une antenne émettrice/réceptrice micro-ondes 12, tandis que dans le panneau 120 opposé l'on aperçoit un transducteur en panneau de type inductif 142 et une antenne réceptrice/émettrice micro-ondes 14.

De préférence la largeur D des panneaux 141 et 142 qui correspond à la profondeur du scanner corporel est comprise entre 920mm et 1400mm préférentiellement entre 1000 et 1400 mm, tandis que la distance transversale W entre les deux transducteurs 12 et 14 est de préférence comprise entre 780 et 1000 mm.

La figure 2f représente une autre variante de réalisation intégrant un scanner corporel conforme à la figure 2e selon laquelle des moyens détecteurs de métaux de type inductif 140 sont colocalisés avec les moyens 12, 14 de détection microondes 10. Ces moyens détecteurs de métaux de type inductif colocalisés avec les moyens de détection de type micro-ondes sont assortis d'un indice « bis » sur la figure 2f. Cependant selon la figure 2f, le dispositif comprend en plus en amont du scanner corporel 10, un détecteur de métal additionnel 100. Selon le mode de réalisation représenté sur la figure 2f ce détecteur de type champ inductif amont 100 est formé de deux transducteurs 141 et 142 conformes à la figure 2a. En variante ce détecteur de type champ inductif 100 amont pourrait être conforme à la figure 2b correspondant à des détecteurs formés de bobinages en panneau, voire le cas échéant à l'un des modes de réalisation illustré sur la figure 2c ou 2d.

Les valeurs de largeur D de transducteurs 141, 142, 143 et 144, écart L entre les transducteurs, entraxe entre les transducteurs, distance transversale W entre les transducteurs et angle entre les lignes transversales et obliques de détection ainsi formées, indiquées pour les figures 2a à 2e restent applicables à la figure 2f.

On rappellera que dans le cadre de la présente invention, chacun des moyens émetteur et/ou récepteur peut alternativement fonctionner en mode inverse, c'est-à-dire récepteur et/ou émetteur.

Les figures 3 à 8 représentent différents organigrammes de procédé de détection conformes à la présente invention.

On va maintenant décrire le mode de réalisation illustré sur la figure 3.

On aperçoit sur cette figure 3 un organigramme qui comprend les étapes successives suivantes :
- étape 300 : début de l'examen d'une personne. A ce stade, un individu à examiner est invité à entrer dans le scanner corporel conforme à l'invention, en passant par le détecteur de type champ inductif 100,
- étape 310 : début du transit de l'individu à travers le champ inductif généré par le détecteur de type champ inductif 100, plus précisément par les bobinages 140. Au cours de cette étape l'individu examiné traverse/s'arrête, franchit la zone d'inspection à champ inductif (on rappelle que comme indiqué précédemment la zone d'inspection à base de champ inductif peut être située en amont du scanner corporel 10 proprement dit comme illustré sur la figure 1 et les figures 2a à 2d ou recouvrir la zone du scanner corporel 10 comme illustré sur les figures 2e et 2f),
- étape 311 : acquisition du signal correspondant au champ inductif,
- étape 320 : analyse des signaux issus du détecteur de type champ inductif 100 par les moyens d'analyse 50 pour rechercher si une détection d'une cible en métal a été opérée ou non.
- étape 330 mise en oeuvre en cas de réponse négative à l'étape de détection d'une cible 320 : les moyens d'analyse 50 du système positionnent la sensibilité de l'imagerie micro-ondes 10 sur un niveau de sensibilité faible « diélectrique ». La modification de la sensibilité de l'imagerie micro-ondes 10 est réalisée en modifiant des paramètres de traitement de l'image microondes par les moyens d'analyse 50 en vue de déterminer si, en fonction des signaux générés par le détecteur de type champ inductif 100, des instructions de génération d'une alarme (sonore et/ou optique) doivent être envoyées par les moyens d'analyse 50 à un dispositif d'alerte adapté. Dans le cas d'espèce, le détecteur de type champ inductif 100 n'ayant pas détecté de cible métallique, les moyens d'analyse 50 modifient les paramètres de traitement de l'image microondes de sorte à procéder à une analyse au niveau du scanner corporel 10 sur la base d'une sensibilité d'imagerie dans un champ d'inspection micro-ondes qui correspond à un niveau juste nécessaire pour opérer la détection de cibles diélectriques, c'est-à-dire une sensibilité plus faible que celle requise pour une détection des cibles métalliques. Cette disposition permet de limiter le risque de fausses alarmes.
- étape 340 mise en oeuvre en cas de réponse positive à l'étape 320 : les moyens d'analyse 50 du système positionnent la sensibilité d'imagerie micro-ondes 10 cette fois à un niveau de sensibilité plus élevé « métal & diélectrique ». Ici encore, la modification de la sensibilité de l'imagerie micro-ondes 10 est réalisée en modifiant les paramètres de traitement de l'image microondes par les moyens d'analyse 50. En particulier, cette modification de la sensibilité permet de détecter à la fois des cibles métalliques et des cibles diélectriques. Bien que plus rigoureuse et susceptible de générer un niveau de fausses alarmes plus important, cette disposition est requise du fait que le détecteur de type champ inductif 100 a détecté la présence potentielle de métal amont (ceci n'intervenant que dans 10% des cas, bien que conduisant intrinsèquement à un risque de taux de fausses alarmes élevé, n'induit pas un taux global de risques de fausses alarmes conséquent).
- étape 342 : acquisition du signal des moyens de détection dans le champ micro-ondes 10. Au cours de cette étape, l'individu inspecté est scanné par le champ d'inspection micro-ondes 10. Les données pertinentes issues des moyens de détection sont collectées et analysées de sorte à générer une image microonde.
- étape 360 : au cours de cette étape les moyens d'analyse 50 analysent les signaux issus des moyens de détection micro-ondes 10 et recherchent si ceux-ci correspondent à la localisation d'une cible. Pour cela, les moyens d'analyse 50 effectuent un traitement de l'image microonde en tenant compte de la sensibilité d'imagerie micro-ondes déterminée à l'étape 330 ou à l'étape 340, selon la réponse à l'étape 320.

On comprendra que, dans une variante de réalisation, l'étape 340 de modification de la sensibilité peut en variante être simultanée ou ultérieure à l'étape 342 d'acquisition, la modification de la sensibilité correspondant à une modification des paramètres de traitement de l'image microonde.
- étape 380 mise en œuvre en cas de réponse positive à l'étape 360 : indication d'une alarme (sonore et/ou visuelle) et visualisation de la position des cibles sur l'image microonde générée par les moyens d'analyse 50. La visualisation de l'alarme est mise à disposition d'un opérateur, typiquement sur un écran avec visualisation de la position des cibles détectées sur l'image microonde. On observera que l'étape 380 est omise dans l'hypothèse où l'étape 360 ne détecte pas de cible.
- étape 390 : fin de l'examen d'un individu.

Dans une forme de réalisation, au cours de l'étape 340, les moyens d'analyse 50 peuvent être configurés pour ne modifier la sensibilité d'imagerie micro-ondes que dans la zone de l'image microonde dans laquelle le détecteur de type champ inductif 100 a détecté une cible en métal, la sensibilité restant inchangée dans les autres zones de l'image microonde. En d'autres termes, les moyens d'analyse 50 ne modifient cette sensibilité que dans une partie de l'image microonde qui est obtenue à partir des signaux issus des moyens de détection micro-ondes 10, ladite partie correspondant à la zone dans laquelle le détecteur de type champ inductif a opéré une détection d'une cible métallique.

L'organigramme représenté sur la figure 4 correspond à une variante de mise en œuvre du procédé conforme à l'invention dans le cas d'une détection d'objets métalliques avec un champ inductif monodimensionnel exploitant le dispositif illustré sur la figure 2a.

On retrouve sur la figure 4 les étapes 300 de début d'examen, 312 de transit à travers le champ inductif, 320 de détection des cibles métalliques, 330 de positionnement de la sensibilité du scanner corporel sur un niveau de sensibilité faible « diélectrique » en cas de non détection préalable d'un objet en métal, 340 de positionnement de la sensibilité du scanner corporel au contraire sur un niveau de sensibilité élevé « métal et diélectrique » en cas de détection préalable d'un objet en métal, 342 d'acquisition du signal du champ de détection microondes, 360 de localisation d'une cible, 380 d'indication d'une alarme et de visualisation de la position d'une cible détectée sur l'image microonde générée par les moyens d'analyse 50 et 390 de fin de l'examen, précédemment décrites en regard de la figure 3.

On observera cependant que la figure 4 représente une étape d'acquisition du signal de champ inductif 1D plus développée que l'étape 311 de la figure 3. Selon la figure 4 en effet cette acquisition du signal de champ inductif 1D se décompose sous forme de la séquence d'étapes suivantes :
- étape 310 : début de l'acquisition du champ inductif 1D, précédant l'étape de transit 312, puis une préparation à la mise en œuvre du scanner corporel, sous forme des étapes suivantes :
- étape 314 : positionnement de l'individu pour un examen par balayage du champ micro-ondes,
- étape 316 : recherche d'une validation de la disponibilité du scanner corporel, par exemple par sollicitation d'un bouton de validation par un opérateur autorisé, tel qu'illustré sur la figure 4c, ou automatiquement par un capteur de la position de la personne, puis
- étape 318 : fin de l'acquisition du champ inductif 1D.

Par ailleurs entre les étapes 300 de début d'examen et l'étape 310 de début d'acquisition du champ d'induction 1D, l'organigramme illustré sur la figure 4 comprend les étapes suivantes :
- étape 302 de fourniture initiale d'un signal visuel demandant à l'individu à examiner d'attendre avant de pénétrer dans le détecteur de type champ inductif 100, par exemple sous forme d'un signal lumineux rouge.
- étape 304 de recherche de la présence ou non d'un individu précédent toujours dans le dispositif d'examen. En cas d'identification d'un individu dans le dispositif, celui-ci n'étant pas vide, l'étape 304 est rebouclé sur l'étape 302 d'attente. Au contraire si aucun individu n'est détecté dans le dispositif, qui est alors vide, l'étape 304 est suivi de l'étape 308.

Les étapes 302 et 304 sont illustrées schématiquement sur la figure 4a.
- étape 308 : fourniture d'un signal visuel invitant l'individu à pénétrer dans le détecteur de type champ inductif 100, par exemple sous forme d'un signal lumineux vert.

Les étapes 308 à 312 sont illustrées schématiquement sur la figure 4b.

Les étapes 314 à 342 sont illustrées schématiquement sur la figure 4c. On notera que les pieds de l'individu examiné reposent sur les marquages au sol 20, 22.

Les étapes 360 à 390 sont illustrées schématiquement sur la figure 4d.

L'organigramme de fonctionnement d'un dispositif conforme à la figure 2b comprenant une détection d'objets métalliques avec un champ inductif monodimensionnel à l'aide de panneaux, peut être similaire à celui illustré sur la figure 4.

L'organigramme représenté sur la figure 5 correspond à une variante de mise en œuvre du procédé conforme à l'invention dans le cas d'une détection d'objets métalliques avec un champ inductif tridimensionnel exploitant le dispositif illustré sur la figure 2c.

On retrouve sur la figure 5 les étapes 300, 302, 304, 308, 310 (ici de début d'acquisition du champ inductif 3D), 312, 314, 316, 318 (ici de fin d'acquisition du champ inductif 3D), 320 (ici d'analyse des signaux issus du détecteur de type champ inductif 100 exploitant un champ inductif 3D pour rechercher si une détection d'une cible ou d'un métal a été opérée ou non et localiser cette cible en 3D), 330, 340, 342 d'acquisition du signal du champ de détection microondes, 380 et 390, précédemment décrites en regard de la figure 4. Ces étapes ne seront pas redécrites.

On observera cependant que la figure 5 représente après l'étape 330, en cas de non détection d'un objet en métal par le détecteur de type champ inductif 100 à l'étape 320, une série d'étapes plus détaillée, avant de rejoindre l'étape finale 390 de fin d'examen :
- une étape 332 d'acquisition du signal résultant du champ de détection microondes,
- une étape 350 de recherche de cible détectée par le champ micro-ondes, suivie de l'étape 390 de fin d'examen en cas d'absence de détection d'une cible à l'étape 350,
- une étape 352 mise en œuvre en cas de détection d'une cible par le champ micro-ondes à l'étape 350, consistant en un calcul de la position de chaque cible détectée par le champ micro-ondes et
- une étape 370 similaire à l'étape 380 d'indication d'une alarme et visualisation de la position des cibles.

On observera également que la figure 5 représente entre les étapes 320 et 340 une étape intermédiaire 322 de calcul de la position de chaque cible métallique détectée avec le champ inductif 3D. Plus précisément, en cas de détection d'un objet en métal par le détecteur de type champ inductif 100 à l'étape 320, le procédé détermine de la position en trois dimensions de chaque objet métallique détecté au cours de l'étape intermédiaire 322 (les moyens d'acquisition du champ inductif étant ici tridimensionnels). Au cours de l'étape 340, la sensibilité de l'imagerie microondes peut alors être placée sur « métal & diélectrique » soit dans l'intégralité de l'image microonde, soit uniquement dans la ou les zones dans lesquelles le(s) objet(s) métallique(s) ont été détectés par le détecteur de type champ inductif 100. L'étape 342 d'acquisition du signal microonde peut ensuite être mise en œuvre.

Comme indiqué plus haut, l'étape 340 de modification de la sensibilité peut en variante être simultanée ou ultérieure à l'étape 342 d'acquisition, la modification de la sensibilité correspondant à une modification des paramètres de traitement de l'image microonde.

L'organigramme de la figure 5 comprend par ailleurs à la place de l'étape 360 de la figure 4, une étape 362 de recherche de détection d'une cible à l'aide du champ micro-ondes, similaire à l'étape 350, suivie en cas de réponse positive, donc en cas de détection d'une cible à l'étape 362, d'une étape 364 similaire à l'étape 352, consistant en un calcul de la position de chaque cible détectée par le champ microondes, elle-même suivie de l'étape 380 d'indication d'une alarme et visualisation de la position des cibles détectées par micro-ondes sur l'image microonde générée par les moyens d'analyse 50.

L'organigramme de la figure 5 comprend en outre, entre les étapes 380 et 390, une étape 382 d'indication d'une alarme et visualisation de la position 3D des cibles en métal détectées par le champ inductif 3D.

L'étape 362 se poursuit par cette même étape 382 lorsque l'étape 362 ne conduit pas à la détection d'une cible à l'aide du champ micro-ondes.

Les étapes 302 et 304 sont illustrées schématiquement sur la figure 5a.

Les étapes 308 à 312 sont illustrées schématiquement sur la figure 5b.

Les étapes 314 à 342 sont illustrées schématiquement sur la figure 5c.

Les étapes 362 à 390 sont illustrées schématiquement sur la figure 5d.

L'organigramme de fonctionnement d'un dispositif conforme à la figure 2d comprenant une détection d'objets métalliques avec un champ inductif tridimensionnel à l'aide de panneaux, peut être similaire à celui illustré sur la figure 5.

L'organigramme représenté sur la figure 6 correspond à une variante de mise en œuvre du procédé conforme à l'invention dans le cas d'une détection d'objets métalliques avec un champ inductif monodimensionnel exploitant le dispositif illustré sur la figure 2e comprenant des moyens colocalisés d'analyse à base de microondes et de moyens d'analyse de type inductif monodimensionnel.

On retrouve sur la figure 6 les étapes 300, 302, 304, 308, 314, 316, 320 (ici d'analyse des signaux issus du détecteur de type champ inductif 100 exploitant un champ inductif 1D pour rechercher si une détection d'une cible ou en métal a été opérée ou non), 330, 340, 342, 360 (ici de détection d'une cible avec le champ de détection micro-ondes), 380 et 390, précédemment décrites. Ces étapes ne seront pas redécrites.

On observera cependant que la figure 6 représente entre l'étape 304 de recherche de la disponibilité du dispositif et l'étape 308 d'autorisation d'entrée dans le dispositif, une étape 306 d'initialisation ou mise à zéro des récepteurs de champ d'induction 1D, et entre les étapes 316 et 320, l'étape 319 d'acquisition du signal résultant du champ d'induction 1D.

Les étapes 302 et 304 sont illustrées schématiquement sur la figure 6a.

Les étapes 306 et 308 sont illustrées schématiquement sur la figure 6b.

Les étapes 314 à 342 sont illustrées schématiquement sur la figure 6c.

Les étapes 360 à 390 sont illustrées schématiquement sur la figure 6d.

L'organigramme représenté sur la figure 7 correspond à une variante de mise en œuvre du procédé conforme à l'invention dans le cas d'une détection d'objets métalliques avec un champ inductif tridimensionnel exploitant un dispositif du type illustré sur la figure 2e comprenant des moyens colocalisés d'analyse à base de micro-ondes et de moyens d'analyse de type inductif tridimensionnel.

On retrouve sur la figure 7 les étapes 300, 302, 304, 306, 308, 314, 316, 319, 320, 330, 332, 350, 352, 370, 322, 340, 342, 362, 364, 380, 382 et 390, précédemment décrites (les étapes 306, 319, 320 concernant ici un champ inductif 3D). Ces étapes ne seront pas redécrites.

Les étapes 302 et 304 sont illustrées schématiquement sur la figure 7a.

Les étapes 306 et 308 sont illustrées schématiquement sur la figure 7b.

Les étapes 314 à 342 sont illustrées schématiquement sur la figure 7c.

Les étapes 362 à 390 sont illustrées schématiquement sur la figure 7d.

L'organigramme représenté sur la figure 8 correspond à une variante de mise en œuvre du procédé conforme à l'invention exploitant un dispositif du type illustré sur la figure 2f comprenant des moyens colocalisés d'analyse à base de micro-ondes et des moyens d'analyse de type inductif tridimensionnel, précédés par des moyens d'analyse de type inductif monodimensionnel.

On retrouve sur la figure 8 les étapes 300, 302, 304, 306, 308, 310, 312, 314, 316, 318, 320, 330, 332, 350, 352, 370, 322, 340, 342, 362, 364, 380, 382 et 390, précédemment décrites (les étapes 310, 312, 318, 320, concernant ici le champ inductif 1D, tandis que l'étape 322 concernent ici un champ inductif 3D). Ces étapes ne seront pas redécrites.

On observera que la figure 8 représente en outre entre les étapes 320 et 322 une étape 321 d'acquisition du signal résultant du champ d'induction 3D.

Les étapes 302 et 304 sont illustrées schématiquement sur la figure 8a.

Les étapes 306 et 308 sont illustrées schématiquement sur la figure 8b.

Les étapes 310 à 342 sont illustrées schématiquement sur la figure 8c.

Les étapes 362 à 390 sont illustrées schématiquement sur la figure 8d.

L'homme de l'art comprendra que l'utilisation d'un niveau de sensibilité pour la détection d'imageries micro-ondes dans le scanner corporel 10 à un niveau de sensibilité suffisant pour détecter à la fois des cibles métalliques et des cibles diélectriques n'étant mise en œuvre que lorsque le détecteur de type champ inductif 100 a détecté précédemment la présence possible d'une cible métallique, ce qui est n'intervient au mieux que dans 10% des examens, permet de limiter considérablement le risque de fausses alarmes au niveau du scanner corporel.

En effet, l'utilisation dans 90% des cas du niveau de sensibilité du type diélectrique au niveau du scanner corporel, c'est-à-dire une sensibilité moins élevée permet de limiter considérablement le risque de fausses alarmes.

Les différences existantes entre les organigrammes référencées sur les figures 4, 5, 6, 7 et 8 ne correspondent qu'à des modalités optionnelles de mise en œuvre.

Les modes de mise en œuvre du procédé conforme à la présente invention, schématisés par les organigrammes illustrés sur les figures 3 à 8, peuvent faire l'objet de nombreuses variantes de réalisation. En particulier l'ordre de mise en œuvre des différentes étapes peut faire l'objet de nombreuses variantes, certaines au moins des étapes illustrées sur les figures 3 à 8 pouvant être omises, inversées, opérées en parallèle ou complétées.

Le mode de réalisation représenté sur la figure 2f selon lequel des moyens de détection de métal 140 permettant une détection 3D sont colocalisés avec le scanner corporel 10, mais cependant il est également prévu des moyens de détection de type champ inductif 100 additionnels permettant une détection 1D en amont du scanner corporel 10, présente l'avantage que, avec cette configuration, on peut exploiter le détecteur de type champ inductif 1D amont à induction optimisé pour la discrimination entre la présence ou non d'objets métalliques et le pilotage en conséquence de la sensibilité du scanner corporel 10 pour limiter au minimum le nombre d'alarmes intempestives et le détecteur de type champ inductif 3D colocalisé avec le scanner corporel 10 à induction optimisé pour la localisation des objets métalliques et obtenir ainsi un maximum de précision dans la localisation des objets métalliques. En d'autres termes, dans une forme de réalisation, les moyens de détection de type inductif monodimensionnels 141, 142 sont utilisés pour déterminer si une cible en métal doit être détectée tandis que les moyens de détection de type inductif tridimensionnels 141bis, 142bis (qui ne sont pas nécessairement colocalisés) peuvent être utilisés pour déterminer avec précision la position tridimensionnelle du ou des objet(s) métallique(s). Les moyens de détection de type inductif monodimensionnels et tridimensionnels peuvent ainsi être spécialisés pour effectuer une détection sans localisation (cas des moyens monodimensionnels 141, 142) ou avec localisation (cas des moyens tridimensionnels 141bis, 142bis).

Comme indiqué précédemment dans le cadre de l'invention de préférence le résultat de l'analyse de type inductif visant la recherche d'un objet métallique et le résultat de l'analyse par imagerie à base de micro-ondes sont visualisés sur un écran unique mis à disposition d'un opérateur.

Selon un mode de réalisation particulier conforme à la présente invention, dans le cas de détection par le champ inductif d'une ou de plusieurs cibles, la sensibilité du système d'imagerie à microondes 10 est présélectionnée au niveau « métal & diélectrique » seulement dans la(les) zone(s) où le système inductif 100 a déterminé la présence de(s) cible(s) métallique(s), tandis que dans les autre zones la sensibilité du système d'imagerie à microondes 10 est présélectionné au niveau « diélectrique ». Pour cela, et comme cela a été décrit plus haut, les moyens d'analyse 50 sont configurés pour ne modifier les paramètres de traitement de l'image microonde que dans la(les) zone(s) dans lesquelles le détecteur de type champ inductif 100 a détecté une cible en métal. La sensibilité de l'imagerie microondes 10 reste en revanche inchangée dans les autres zones de l'image microonde afin de limiter les taux de fausses alarmes. Ainsi, les moyens d'analyse 50 ne modifient cette sensibilité que dans une partie de l'image microonde qui est obtenue à partir des signaux issus des moyens de détection micro-ondes 10, ladite partie correspondant à la zone dans laquelle le détecteur de type champ inductif a opéré une détection d'une cible métallique.

Dans le cas d'utilisation d'un système inductif 1D les zones dans lesquelles la sensibilité de l'imagerie microonde est modifiée sont définies en hauteur seulement, tandis que dans le cas d'utilisation d'un système inductif 3D les zones peuvent être définies en hauteur, largeur (droite/gauche) et profondeur (avant/arrière).

Le dispositif d'alerte peut notamment comprendre l'un au moins des dispositifs suivants : un haut-parleur configuré pour générer une alerte sonore, une lumière configurée pour générer un signal lumineux (tel qu'une diode électroluminescente) qui peut éventuellement être coloré, un écran configuré pour afficher un message d'alerte, le cas échéant par-dessus l'image microonde obtenue par les moyens d'analyse 50.

## Revendications

1. Système de détection comprenant :
- des moyens de détection de type champ inductif (140)
- des moyens de détection de type par imagerie champ à micro-ondes (10) configurés pour générer une image microonde,
- des moyens (50) d'analyse configurés pour analyser les signaux issus des moyens de détection inductifs (140) et en déduire la présence potentielle de cibles métalliques,
lesdits moyens d'analyse (50) étant en outre configurés pour déterminer, en cas d'identification d'une présence potentielle d'au moins une cible métallique par les moyens de détection de type champ inductif (140), une position de l'au moins une cible métallique, et pour adapter en conséquence la sensibilité des moyens de détection par imagerie micro-ondes (10) de sorte que ladite sensibilité soit plus importante dans une ou des zones d'intérêt correspondant à la position de l'au moins une cible métallique que dans le reste de l'image microonde.

2. Système selon la revendication 1, dans lequel les moyens d'analyse sont configurés pour adapter la sensibilité des moyens de détection par imagerie microondes (10) de sorte que ladite sensibilité est plus élevée dans la ou les zone(s) d'intérêt que dans le reste de l'image microonde.

3. Système selon l'une des revendications 1 ou 2, dans lequel les moyens d'analyse (50) sont configurés pour adapter la sensibilité des moyens de détection par imagerie micro-ondes (10) en modifiant des paramètres de traitement de l'image microonde.

4. Système selon l'une des revendications 1 à 3, dans lequel les moyens de détection inductifs (40) sont positionnés en amont des moyens de détection par imagerie micro-ondes (10) et/ou superposés, c'est-à-dire colocalisés, avec les moyens de détection par imagerie micro-ondes (10).

5. Système selon l'une des revendications 1 à 4, dans lequel les moyens de détection inductifs (14) comprennent des moyens de détection monodimensionnels qui peuvent comprendre deux transducteurs (141, 142) disposés respectivement de part et d'autre d'un passage défini par les moyens de détection inductifs (100).

6. Système selon l'une des revendications 1 à 5, dans lequel les moyens de détection inductifs (140) comprennent des moyens de détection tridimensionnels qui peuvent comprendre au moins trois transducteurs (141, 142 et 144) répartis sous forme de deux transducteurs placés d'un même côté d'un passage défini par les moyens de détection inductifs (140) et un transducteur disposé sur le côté opposé, les deux transducteurs (141, 142) disposés sur le même côté du passage étant espacés longitudinalement.

7. Système selon la revendication 6, dans lequel les moyens de détection inductifs comprennent au moins trois transducteurs configurés pour définir des lignes de détection transversales à la direction de passage permettant notamment de localiser l'au moins un objet métallique sur un individu en discriminant le positionnement de l'au moins un objet entre l'avant et l'arrière des individus et des lignes de détection obliques par rapport à la direction de déplacement pour opérer des détections latérales sur l'individu en discriminant notamment entre un positionnement gauche et un positionnement droit d'objets métalliques sur l'individu.

8. Système selon la revendication 7, dans lequel un angle formé entre les lignes de détection obliques est compris entre 15° et 60° inclus, de préférence entre 30° et 45° inclus.

9. Système selon l'une des revendications 1 à 8, comprenant des moyens de détection inductifs monodimensionnels (140) disposés en amont des moyens de détection par imagerie micro-ondes (10) et des moyens de détection inductifs tridimensionnels (140) qui sont superposés, c'est-à-dire colocalisés, avec les moyens de détection par imagerie micro-ondes (10).

10. Système selon la revendication 9, dans lequel les moyens de détection inductifs monodimensionnels (141, 142) sont configurés pour la discrimination d'une présence ou non d'au moins un objet métallique afin de minimiser le nombre d'alarmes intempestives et les moyens de détection inductifs (141bis, 142bis) tridimensionnels sont configurés pour déterminer une position de l'au moins un objet métallique détecté par les moyens de détection inductifs monodimensionnels (141, 142) afin de maximiser la précision de localisation.

11. Procédé de détection d'objets non autorisés comprenant les étapes suivantes :
- examen d'un individu à l'aide d'une double technique comprenant une analyse de type champ inductif (100) et une analyse à base d'imagerie par champ micro-ondes (10) afin d'obtenir une image microonde,
- analyse des signaux issus des moyens de détection de type inductif (100)
- déduction de la présence potentielle de cibles métalliques,
- détermination, en cas d'identification d'une présence potentielle d'au moins une cible métallique par les moyens de détection de type champ inductif (140), d'une position de l'au moins une cible métallique, et
- adaptation en conséquence de la sensibilité de détection par imagerie micro-ondes (10) de sorte que ladite sensibilité soit plus importante dans une ou des zones d'intérêt correspondant à la position de l'au moins une cible métallique que dans le reste de l'image microonde.

12. Procédé selon la revendication 11, dans lequel, au cours de l'étape d'adaptation, la sensibilité de détection par imagerie micro-ondes (10) est adaptée de sorte que ladite sensibilité est plus élevée dans la ou les zone(s) d'intérêt que dans le reste de l'image microonde.

13. Procédé selon l'une des revendications 11 ou 12, dans lequel, au cours de l'étape d'adaptation, des paramètres de traitement de l'image microonde sont modifiés.

14. Procédé selon l'une des revendications 11 à 13, comprenant en outre les sous-étapes successives suivantes :
- détermination d'une présence ou non d'au moins un objet métallique afin de minimiser le nombre d'alarmes intempestives et
- détermination d'une position tridimensionnelle de l'au moins un objet métallique ainsi détecté afin de maximiser la précision de localisation.

15. Procédé selon l'une des revendications 11 à 14, comprenant en outre une étape de visualisation sur un écran du résultat de l'analyse de type inductif visant la recherche de l'au moins un objet métallique et de l'analyse par imagerie à base de micro-ondes.

## Patentansprüche

1. Detektionssystem, umfassend:
- Detektionsmittel vom induktiven Feldtyp (140),
- Detektionsmittel vom Typ der Mikrowellenfeldbildgebung (10), das konfiguriert ist, um eine Mikrowellenabbildung zu erzeugen,
- Analysemittel (50), die konfiguriert sind, um die von dem induktiven Detektionsmittel (140) ausgegebenen Signale zu analysieren und das potenzielle Vorhandensein von metallischen Zielen daraus abzuleiten,
wobei die Analysemittel (50) ferner konfiguriert sind, um im Fall einer Identifizierung ein potenzielles Vorhandensein mindestens eines metallischen Ziels durch die Detektionsmittel vom induktiven Feldtyp (140) und eine Position des mindestens einen metallischen Ziels zu bestimmen und um dementsprechend die Empfindlichkeit der mikrowellenbildgebenden Detektionsmittel (10) derart anzupassen, dass die Empfindlichkeit in einem oder mehreren interessierenden Bereichen, die der Position des mindestens einen metallischen Ziels entsprechen, größer ist als im Rest der Mikrowellenabbildung.

2. System nach Anspruch 1, wobei die Analysemittel konfiguriert sind, um die Empfindlichkeit der mikrowellenbildgebenden Detektionsmittel (10) derart anzupassen, dass die Empfindlichkeit in dem oder den interessierenden Bereich(en) höher ist als im Rest der Mikrowellenabbildung.

3. System nach einem der Ansprüche 1 oder 2, wobei die Analysemittel (50) konfiguriert sind, um die Empfindlichkeit der mikrowellenbildgebenden Detektionsmittel (10) durch Modifizieren der Verarbeitungsparameter der Mikrowellenabbildung anzupassen.

4. System nach einem der Ansprüche 1 bis 3, wobei die induktiven Detektionsmittel (40) den mikrowellenbildgebenden Detektionsmittel (10) vorgelagert positioniert sind und/oder mit den mikrowellenbildgebenden Detektionsmittel (10) überlagert, das heiß, zusammen angeordnet sind.

5. System nach einem der Ansprüche 1 bis 4, wobei die induktiven Detektionsmittel (14) eindimensionale Detektionsmittel umfassen, die zwei Wandler (141, 142) umfassen können, die jeweils auf beiden Seiten eines durch die induktiven Detektionsmittel (100) definierten Kanals angeordnet sind.

6. System nach einem der Ansprüche 1 bis 5, wobei die induktiven Detektionsmittel (140) dreidimensionale Detektionsmittel umfassen, die mindestens drei Wandler (141, 142 und 144) umfassen können, die in Form von zwei auf der gleichen Seite des durch die induktiven Detektionsmittel (140) definierten Kanals platzierten Wandlern und eines auf der gegenüberliegenden Seite angeordneten Wandlers verteilt sind, wobei die zwei auf der gleichen Seite des Kanals angeordneten Wandler (141, 142) in Längsrichtung beabstandet sind.

7. System nach Anspruch 6, wobei die induktiven Detektionsmittel mindestens drei Wandler umfassen, die konfiguriert sind, um einerseits zur Durchgangsrichtung querverlaufende Detektionslinien, die es insbesondere ermöglichen, das mindestens eine metallische Objekt an einer Person zu lokalisieren, indem die Positionierung des mindestens einen Objekts zwischen der Vorderseite und der Rückseite der Personen unterschieden wird, und in Bezug auf die Bewegungsrichtung schräge Detektionslinien zu definieren, um seitliche Detektionen an der Person durchzuführen, indem insbesondere zwischen einer Linkspositionierung und einer Rechtspositionierung von metallischen Objekten an der Person unterschieden wird.

8. System nach Anspruch 7, wobei ein zwischen den schrägen Detektionslinien ausgebildeter Winkel zwischen 15° und einschließlich 60°, bevorzugt zwischen 30° und einschließlich 45° beträgt.

9. System nach einem der Ansprüche 1 bis 8, umfassend eindimensionale induktive Detektionsmittel (140), die den mikrowellenbildgebenden Detektionsmittel (10) vorgelagert sind, und dreidimensionale induktive Detektionsmittel (140), die mit den mikrowellenbildgebenden Detektionsmittel (10) überlagert, d. h., zusammen angeordnet ist.

10. System nach Anspruch 9, wobei die eindimensionalen induktiven Detektionsmittel (141, 142) für die Unterscheidung des Vorhandenseins oder Nichtvorhandenseins mindestens eines metallischen Objekts, um die Anzahl von Fehlalarmen zu minimieren, konfiguriert sind und die dreidimensionalen induktiven Detektionsmittel (141bis, 142bis) konfiguriert sind, um eine Position des mindestens einen metallischen Objekts, das von den eindimensionalen induktiven Detektionsmittel (141, 142) detektiert wird, zu bestimmen, um die Genauigkeit der Lokalisierung zu maximieren.

11. Detektionsverfahren von nicht zugelassenen Objekten, umfassend die folgenden Schritte:
- Untersuchung einer Person unter Verwendung einer Doppeltechnik, die eine induktive Feldanalyse (100) und eine Analyse basierend auf einer Mikrowellenfeldbildgebung (10), um eine Mikrowellenabbildung zu erhalten, umfasst,
- Analyse der von dem Detektionsmittel vom induktiven Typ (100) ausgegebenen Signalen,
- Ableitung des potenziellen Vorhandenseins von metallischen Zielen,
- Bestimmung einer Position des mindestens einen metallischen Ziels im Fall der Identifizierung eines potenziellen Vorhandenseins mindestens eines metallischen Ziels durch die Detektionsmittel vom induktiven Feldtyp (140), und
- Anpassung in Folge der Detektionsempfindlichkeit durch Mikrowellenbildgebung (10) derart, dass die Empfindlichkeit in einem oder mehreren interessierenden Bereichen, die der Position des mindestens einen metallischen Ziels entsprechen, größer ist als im Rest der Mikrowellenabbildung.

12. Verfahren nach Anspruch 11, wobei während des Anpassungsschritts die Detektionsempfindlichkeit durch Mikrowellenbildgebung (10) angepasst wird, so dass die Empfindlichkeit in dem oder den interessierenden Bereich(en) höher ist als im Rest der Mikrowellenabbildung.

13. Verfahren nach einem der Ansprüche 11 oder 12, wobei während des Anpassungsschritts Verarbeitungsparameter der Mikrowellenabbildung modifiziert werden.

14. Verfahren nach einem der Ansprüche 11 bis 13, ferner umfassend die folgenden aufeinanderfolgenden Unterschritte:
- Bestimmung eines Vorhandenseins oder Nichtvorhandenseins mindestens eines metallischen Objekts, um die Anzahl von Fehlalarmen zu minimieren, und
- Bestimmung einer dreidimensionalen Position des mindestens einen dadurch detektierten metallischen Objekts, um die Genauigkeit der Lokalisierung zu maximieren.

15. Verfahren nach einem der Ansprüche 11 bis 14, ferner umfassend einen Schritt des Anzeigens auf einem Bildschirm des Ergebnisses der Analyse vom induktiven Typ, die auf die Suche nach mindestens einem metallischen Objekt ausgerichtet ist, und der Analyse durch Bildgebung basierend auf Mikrowellen.

## Claims

1. A detection system comprising:
- inductive field-type detection means (140)
- microwave field imaging-type detection means (10) configured to generate a microwave image,
- analysis means (50) configured to analyze the signals coming from the inductive detection means (140) and deduce therefrom the potential presence of metal targets,
said analysis means (50) being also configured to determine, in case of identification of a potential presence of at least one metal target by the inductive field-type detection means (140), a position of the at least one metal target, and to adapt accordingly the sensitivity of the microwave imaging detection means (10) so that said sensitivity is greater in one or several areas of interest corresponding to the position of the at least one metal target than in the rest of the microwave image.

2. The system according to claim 1, wherein the analysis means are configured to adapt the sensitivity of the microwave imaging detection means (10) so that said sensitivity is higher in the area(s) of interest than in the rest of the microwave image.

3. The system according to any of claims 1 or 2, wherein the analysis means (50) are configured to adapt the sensitivity of the microwave imaging detection means (10) by modifying microwave image processing parameters.

4. The system according to any of claims 1 to 3, wherein the inductive detection means (40) are positioned upstream of the microwave imaging detection means (10) and/or superimposed, that is to say co-located, with the microwave imaging detection means (10).

5. The system according to any of claims 1 to 4, wherein the inductive detection means (14) comprise one-dimensional detection means which may comprise two transducers (141, 142) disposed respectively on either side of a passage defined by the inductive detection means (100).

6. The system according to any of claims 1 to 5, wherein the inductive detection means (140) comprise three-dimensional detection means which may comprise at least three transducers (141, 142 and 144) distributed in the form of two transducers placed on the same side of a passage defined by the inductive detection means (140) and a transducer disposed on the opposite side, the two transducers (141, 142) disposed on the same side of the passage being spaced longitudinally.

7. The system according to claim 6, wherein the inductive detection means comprise at least three transducers configured to define on the one hand, detection lines transverse to the passage direction allowing in particular locating the at least one metal object on an individual by discriminating the positioning of the at least one object between the front and the back of the individuals and oblique detection lines relative to the direction of movement in order to make lateral detections on the individual by discriminating in particular between a left positioning and a right positioning of metal objects on the individual.

8. The system according to claim 7, wherein an angle formed between the oblique detection lines is comprised between 15° and 60° inclusive, preferably between 30° and 45° inclusive.

9. The system according to any of claims 1 to 8, comprising one-dimensional inductive detection means (140) disposed upstream of the microwave imaging detection means (10) and three-dimensional inductive detection means (140) which are superimposed, that is to say co-located, with the microwave imaging detection means (10).

10. The system of claim 9, wherein the one-dimensional inductive detection means (141, 142) are configured for the discrimination of a presence or absence of at least one metal object in order to minimize the number of inopportune alarms and the three-dimensional inductive detection means (141bis, 142bis) are configured to determine a position of the at least one metal object detected by the one-dimensional inductive detection means (141, 142) in order to maximize the location accuracy.

11. A method for detecting unauthorized objects comprising the following steps:
- inspection of an individual using a dual technique comprising an inductive field-type analysis (100) and a microwave field imaging-based analysis (10) in order to obtain a microwave image,
- analysis of the signals coming from the inductive-type detection means (100)
- deduction of the potential presence of metal targets,
- determination, in case of identification of a potential presence of at least one metal target by the inductive field-type detection means (140), of a position of the at least one metal target, and
- adaptation accordingly of the microwave imaging detection sensitivity (10) so that said sensitivity is greater in one or more areas of interest corresponding to the position of the at least one metal target than in the rest of the microwave image.

12. The method according to claim 11, wherein during the adaptation step, the sensitivity of microwave imaging detection (10) is adapted so that said sensitivity is higher in the area(s) of interest than in the rest of the microwave image.

13. The method according to any of claims 11 or 12, wherein, during the adaptation step, microwave image processing parameters are modified.

14. The method according to any of claims 11 to 13, further comprising the following successive sub-steps:
- determination of a presence or absence of at least one metal object in order to minimize the number of inopportune alarms and
- determination of a three-dimensional position of the at least one metal object thus detected in order to maximize the location accuracy.

15. The method according to any of claims 11 to 14, further comprising a step of display on a screen of the result of the inductive-type analysis to search for the at least one metal object and of the microwave based imaging analysis
